# EUROPÄISCHE PATENTSCHRIFT

(11) **EP 3 129 271 B1**
(45) Veröffentlichungstag und Bekanntmachung des Hinweises auf die Patenterteilung: **02.06.2021**
(21) Anmeldenummer: 15715128.3
(22) Anmeldetag: 17.03.2015
(51) Int. Cl.: B61D 23/02, B60R 3/02

(54) **BEWEGLICHES TRITTBRETT FÜR EINE FAHRZEUGTÜR**
MOVABLE FOOTBOARD FOR A VEHICLE DOOR
MARCHEPIED MOBILE POUR PORTE DE VÉHICULE

(30) Priorität: 07.04.2014 AT 2632014
(43) Veröffentlichungstag der Anmeldung: 15.02.2017
(73) Patentinhaber: Knorr-Bremse GmbH, 2340 Mödling (AT)
(72) Erfinder: AIGNER, Mathias, A-3264 Gresten (AT); HÖLLER, Thomas, A-3325 Ferschnitz (AT); MÄRZENDORFER, Martin, A-3300 Amstetten (AT)
(74) Vertreter: Patentanwälte Barger, Piso & Partner
(86) Internationale Anmeldenummer: PCT/AT2015/050068
(87) Internationale Veröffentlichungsnummer: WO 2015/154111

(56) Entgegenhaltungen:
- WO-A1-02/079018
- WO-A1-2005/108161
- US-A- 1 802 926
- US-A1- 2007 221 442
- US-A1- 2008 276 832
- US-A1- 2011 133 426

## Beschreibung

Die Erfindung betrifft ein Fahrzeug, insbesondere Eisenbahnwagon, mit einem beweglichen Trittbrett für die Türen, entsprechend dem Oberbegriff des Anspruches 1 und der US 2008/276832.

Diese Druckschrift offenbart verschiedene, teils ausfahrbare, teils ausklappbare, meist parallel zur Fahrzeuglängsachse segmentierte Trittbretter, die bezüglich der Ebene des Fahrzeugbodens eine Stufe aufweisen.

Es ist Aufgabe der Erfindung, ein Fahrzeug mit einem ausfahrbares Trittbrett zu schaffen, bei dem im ausgefahrenen, betriebsbereiten Zustand auch bei unterschiedlichen Ausfahrweiten der Höhenunterschied zwischen Fußbodenoberkante (Trittleiste) und der Trittbrettoberkante deutlich verringert oder eliminiert ist.

Unter Eisenbahnwagons werden in der Beschreibung und den Ansprüchen alle schienengebundenen Fahrzeuge für den Personentransport verstanden, ob dies nun Straßenbahnen, U-Bahnen, Schnellbahnen, Vorortezüge oder Reisezüge sind. Die Erfindung ist insbesondere für derartige Anwendungen gedacht, kann aber auch bei anderen Fahrzeugtüren vorteilhaft eingesetzt werden.

Es besteht bei derartigen Fahrzeugen vielfach ein Problem darin, dass beim Halt in einer Station zwischen dem Fußboden, eigentlich der sogenannten Trittleiste, die den türseitigen Endbereich desselben darstellt, einerseits und dem Bahnsteig andererseits in horizontaler Richtung ein Spalt besteht und in vielen Fällen auch ein Höhenunterschied. Es wurden schon verschiedene Vorschläge unterbreitet, um Überbrückungen dieses Spaltes entweder gemeinsam mit dem Öffnen der Türe oder unabhängig davon zu schaffen, doch haften all diesen Versuchen verschiedene Nachteile an, es bleibt auch nach dem Ausfahren eines Trittbrettes zwangläufig ein Höhenunterschied zwischen der Fußbodenoberkante des Wagons und der benachbarten Trittbrettoberkante.

Eine andere Art der Überbrückung besteht aus einer sogenannten Rampe, die stets um dieselbe Länge ausgefahren wird, mit ihrer Front auf dem Bahnsteig zu liegen kommt und sodann mit dem wagonseitigen Ende angehoben wird, bis Niveaugleichheit hergestellt ist. Der große Nachteil liegt in den Gefahren, die beim Ausschieben über dem Bahnsteig und in einigen Fällen auch im Kontaktbereich mit der Trittstufe entstehen.

Ein Absenken bzw. Abschwenken der Trittleiste auf das ausgefahrene Trittbrett wurde ebenfalls vorgeschlagen, doch kommt es hier wegen der Bauhöhe der Trittleiste zu keiner wirklichen Angleichung der Niveaus, und es ist hier die Gefahr des Einklemmens einerseits und der Störung durch Verschmutzung andererseits zu groß, um eine allgemeine Verwendung oder gar Durchsetzung zu erlauben.

Es ist Ziel und Aufgabe der Erfindung, diese Problematik zu lösen bzw. zumindest zu verringern, somit ein ausfahrbares Trittbrett zu schaffen, bei dem im ausgefahrenen und betriebsbereiten Zustand, auch bei unterschiedlichen Ausfahrweiten, der Höhenunterschied zwischen Fußbodenoberkante (Trittleiste) und der Trittbrettoberkante deutlich verringert oder eliminiert ist.

Diese Ziele werden erfindungsgemäß durch die im kennzeichnenden Teil des Anspruches 1 angegebenen Maßnahmen und Kennzeichen erreicht; mit anderen Worten, es weist das Trittbrett auf seiner Oberfläche begehbare bzw. befahrbare Elemente auf, die angehoben werden können und so den Höhenunterschied verringern oder beseitigen.

Die Erfindung wird im Folgenden anhand der Zeichnung näher erläutert, dabei zeigt bzw. zeigen
die Fig. 1 ein erfindungsgemäßes Trittbrett in teilweise ausgefahrener Position,
die Fig. 2 das Trittbrett in angehobener benutzungsbereiter Position,
die Fig. 3 die Situation der Fig. 2 in einer Variante,
die Fig. 4 eine Unteransicht eines erfindungsgemäßen Trittbretts,
die Fig. 5 eine erste Variante des Hebemechanismus,
die Fig. 6 und 7 Varianten des Hebemechanismus in Ansichten analog zur Fig. 5 in drei verschiedenen Stellungen,
die Fig. 8 eine Ausgestaltung der Erfindung und
die Fig. 9 und 10 zwei Details und
die Fig. 11 ein weiteres Detail.

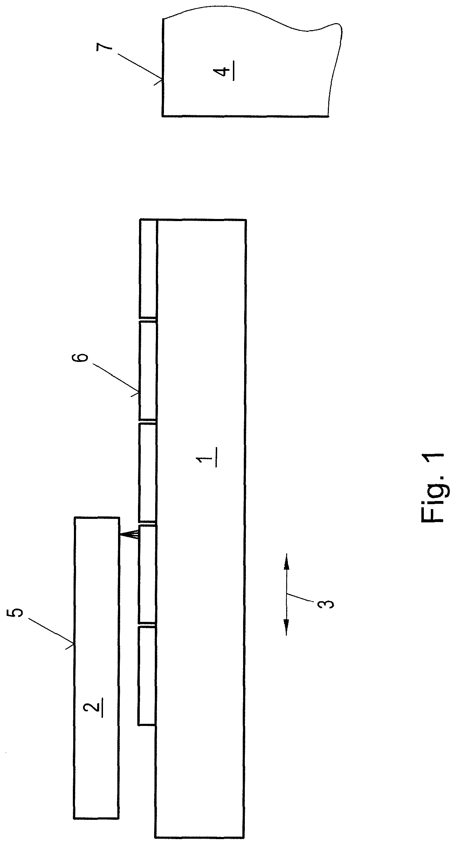

Ein in seiner Gesamtheit mit 1 bezeichnetes Trittbrett ist unterhalb einer Trittleiste 2 eines sonst nicht näher dargestellten Wagenkastens im Türbereich angeordnet. Das Trittbrett 1 kann in annähernd horizontaler Richtung quer zur Fahrtrichtung parallel zum Doppelpfeil 3 verschoben werden. Die Verschiebung erfolgt zwischen einer vollständig eingeschobenen Position, in der das Trittbrett 1 nicht über das Lichtraumprofil vorragt und einer ausgefahrenen Position, in der das Trittbrett 1 so nahe an einen Bahnsteig 4 herangefahren ist, wie dies technisch möglich ist. Die Fig. 1 zeigt eine Zwischenlage des Trittbrettes 1, deutlich ersichtlich sind die Höhenunterschiede zwischen der Fußbodenoberkante 5, der Oberfläche 6 des Trittbrettes 1 und der Bahnsteigoberkante 7.

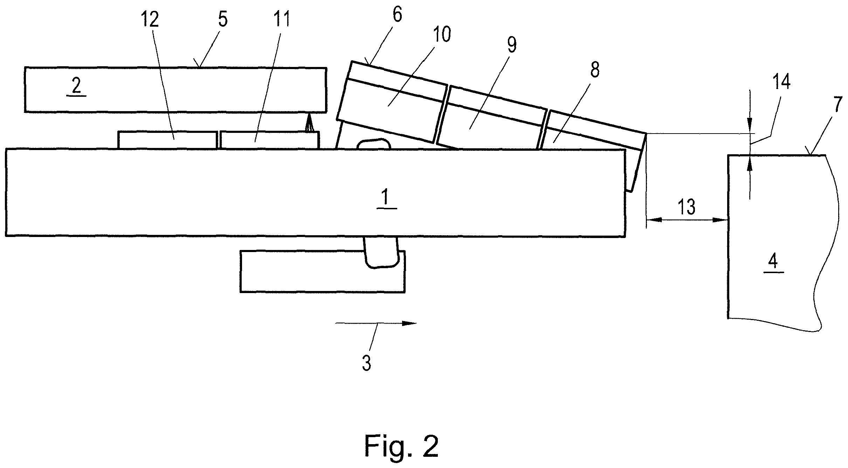

Die Fig. 2 zeigt die Situation im betriebsbereiten Zustand in einer Ansicht ähnlich der der Fig. 1: Das Trittbrett 1 ist in der Ausfahrtrichtung des Pfeiles 3 soweit ausgefahren, dass möglichst viele seiner beweglichen Querprofile 8-12 auf die gezeigte Weise angehoben werden können. Der Mechanismus, durch den das Anheben geschieht, wird weiter unten näher erläutert.

Aus der dargestellten Position der Fig. 2 erkennt man, dass beim weiteren Ausschieben des Trittbrettes 1 nur ein Teil des Querprofils 11 unter der Trittleiste 2 hervorkäme, so dass es nicht möglich wäre, das Querprofil 11 anzuheben. Aus diesem Grund endet der Ausschub in der dargestellten Lage, unter Umständen noch etwas weiter, um den Restspalt 13 passend auf zwei Bereiche zu teilen, je nach der herrschenden Philosophie des Bahnbetreibers, bzw. der Gesetzeslage oder den anwendbaren Normen.

Durch das Anheben der Querprofile 8, 9 und 10 in Form einer Schwenkbewegung erreicht man, dass die begehbare Fläche, die durch die Querprofile gebildet wird, ohne Höhenversatz im Bereich der Fußbodenoberkante 5 weiterführt. Dies ist insbesondere für das Befahren dieser Fläche, die Benutzung mit Rollstühlen, Kinderwägen und dgl. wichtig und wertvoll.

Der verbleibende Spalt 13 ist stets kleiner als die Länge der Querprofile in Ausschubrichtung und somit im Vergleich zu derzeitigen Lösungen vernachlässigbar klein.

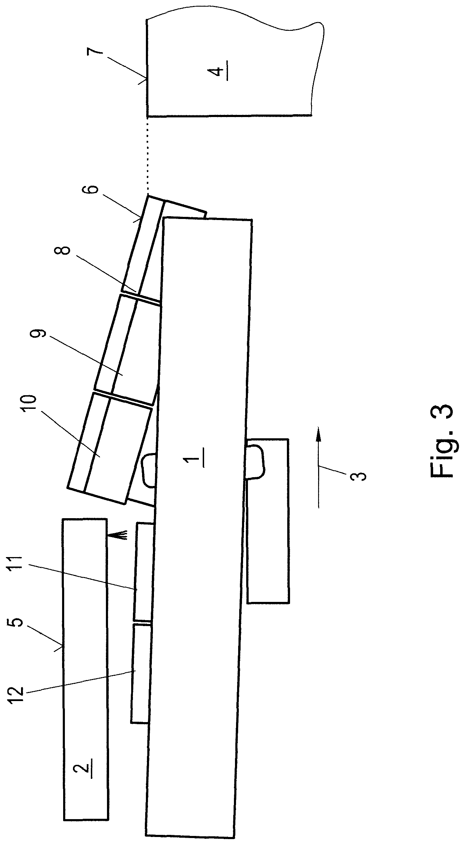

Die Fig. 3 zeigt eine Variante der Fig. 2, bei der das Trittbrett 1 höhenverstellbar, bevorzugt wie dargestellt verschwenkbar, angeordnet ist, wodurch der Höhenunterschied 14 zwischen dem Ende des Querprofils 8 und der Bahnsteigoberkante 7 reduziert oder eliminiert werden kann. Die waagrechte Linie 15 stellt dies augenfällig dar.

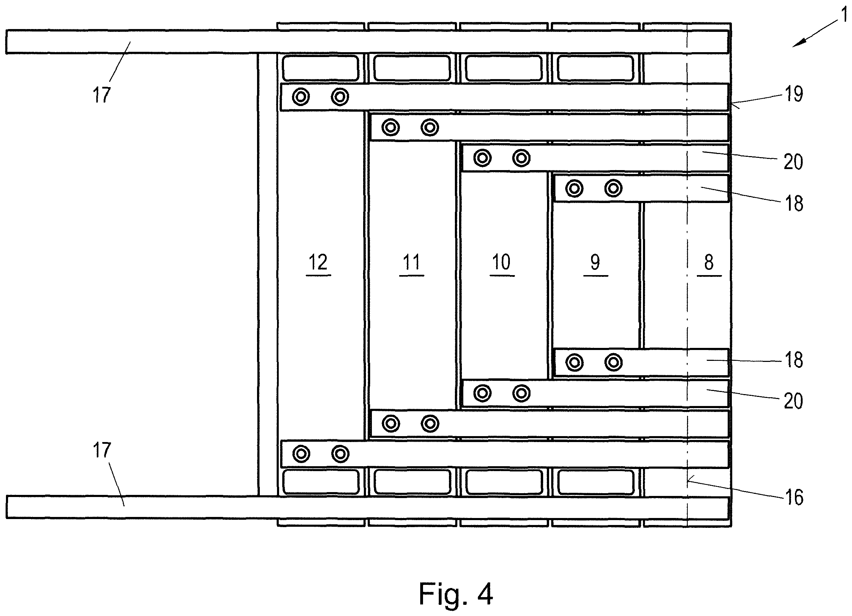

Die Fig. 4 zeigt eine Unteransicht auf das Trittbrett 1, aus der die Konstruktion gut hervorgeht: Am freien Ende zweier Längsholme 17 ist, um eine zur Fahrtrichtung zumindest annähernd parallele Längsachse 16 schwenkbar, das vorderste Querprofil 8 befestigt. Unterhalb des Querprofils 8 ragt ein Paar Schwenkholme 18, die ebenfalls um die Längsachse 16 schwenkbar gelagert sind, von der freien Kante 19 zum Wagenkasten hin, die Schwenkholme 18 sind mit dem nächsten Querprofil 9 fest verbunden. Das gleiche ist der Fall mit einem Paar weiterer Schwenkholme 20 und dem Querprofil 10 und so weiter (ohne Bezugszeichen) bis zum letzten Querprofil 12. Selbstverständlich ist es möglich, jeweils nur einen Schwenkholm oder auch mehr als zwei vorzusehen.

Aufgrund dieser Konstruktion wird nun beim Anheben eines der Querprofile 8 bis 12 über die Konfiguration der Schwenkholme 18 bis 20 etc. von der freien Kante 19 weg jedes der dazwischen befindlichen Querprofile angehoben, während die weiter wagenkastenseitig davon befindlichen Profile weiterhin auf den Längsholmen 17 ruhend verbleiben. Dargestellt sind fünf Querprofile, es können mehr oder weniger sein, zumindest zwei sind nötig um sinnvoll eingesetzt zu werden.

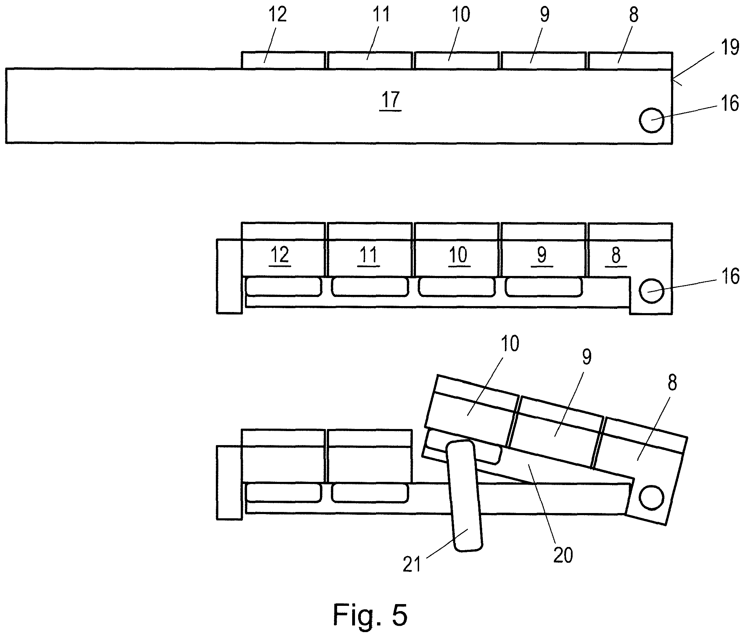

Diese Funktionsweise wird aus einer Zusammenschau mit der Fig. 5 deutlich, die in ihrer ersten Darstellung eine Seitenansicht mit allen Querprofilen auf den Längsholmen 17 ruhend zeigt, die zweite Darstellung zeigt einen schematischen Schnitt, bei dem die Ausbildung der Querprofile 8 bis 12 gut zu erkennen ist, und die dritte Abbildung zeigt, wie durch ein Drehelement 21 das Querprofil 10 angehoben wird und mittels seiner Schwenkholme 20 die Querprofile 8 und 9, die näher zur freien Kante 19 liegen als das Querprofil 10, mit um die Schwenkachse 16 verschwenkt und somit anhebt.

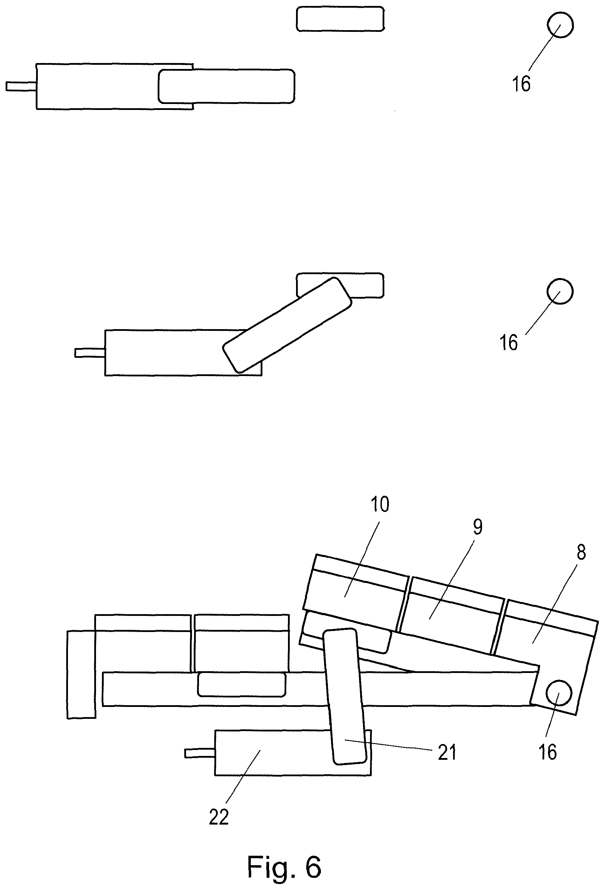

Die Fig. 6 zeigt, rein schematisch, wie das Drehelement 21 über einen Linearantrieb 22 so verdreht wird, dass es dabei das jeweils in seinem Bereich befindliche Querprofil, im gegebenen Fall das Querprofil 10, anhebt.

Es ist klar, dass das Drehelement 21, seine Lagerung und dazugehörige Linearantrieb 22 wagenkastenfest angeordnet ist, um jeweils das Querprofil anzuheben, das sich in der richtigen Position bezüglich der Trittleiste 2 bzw. dessen Vorderkante befindet.

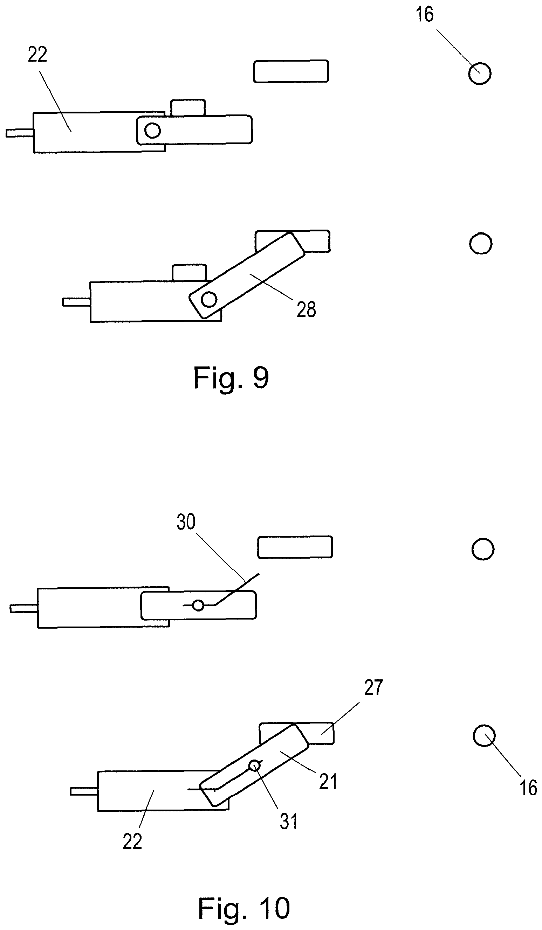

Die Fig. 9 zeigt, einen für diese Bewegung gut geeigneten Mechanismus: Ein linear in Ausschubrichtung hin- und her- beweglicher Linearantrieb 22 weist an seinem vorderen Endbereich eine zur Längsachse 16 im wesentlichen parallele Klappachse 28 auf. Um diese Klappachse 28 schwenkbar ist ein unter der Kraft eines Drehmomentes im Gegenuhrzeigersinn stehendes Drehelement 21 gelagert, das im Zuge der Ausschubbewegung unter einem Führungsteil entlang bewegt, bis es daran vorbei gelangt ist und zufolge der Wirkung des Drehmomentes hochklappt.

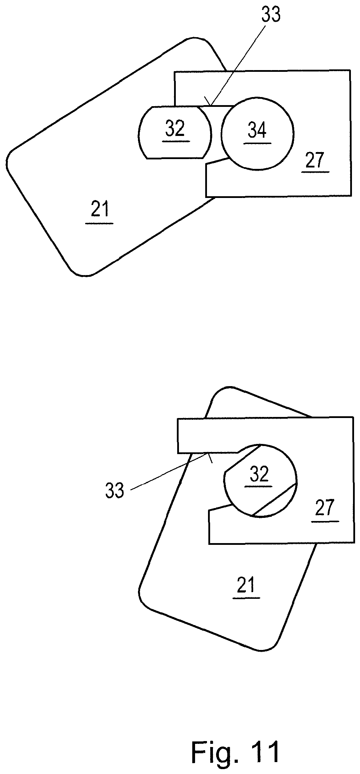

Wie die zweite Darstellung der Fig. 9 zeigt, rastet das Drehelement im Hebeteil 27 des zugeordneten Querprofils 8-12 ein und hebt es hoch, wie in Fig. 11 näher dargestellt.

Die Fig. 10 zeigt eine Variante, bei der statt des Führungsteils 29 eine Führungsschiene 30 am Wagenkasten angeordnet ist, in die ein Bolzen 31 des Drehelementes 21 greift, eigentlich sind es beidseits des Drehelementes vorgesehene Führungselemente. Das Drehelement 21 ist mit dem Linearantrieb 22 wiederum schwenkbar verbunden.

Die Fig. 11 zeigt eine nützlich zu verwendende Ausgestaltung der Verbindung zwischen Drehteil 21 und Hebeteil 27: Ein abgeflachter Bolzen 32 des Drehteils 21, dessen Winkellage am Drehteil 21 mit dessen Winkellage im Moment des Eingriffes korreliert, stößt auf eine Fangfläche 33 des Hebeteils und wird beim weiteren Bewegen des Linearantriebes 22 (Fig. 9, 10) in eine kreisrunde Ausnehmung 34 geschoben. Wenn der Bolzen 32 ans Ende der Ausnehmung 34 gelangt, kommt die waagrechte Bewegung zu einem Ende und der Bolzen 32 bewegt sich in der Folge in vertikaler Richtung, wobei es zufolge der Verdrehung des Bolzens zu dessen formschlüssiger Sicherung in der Ausnehmung 34 kommt.

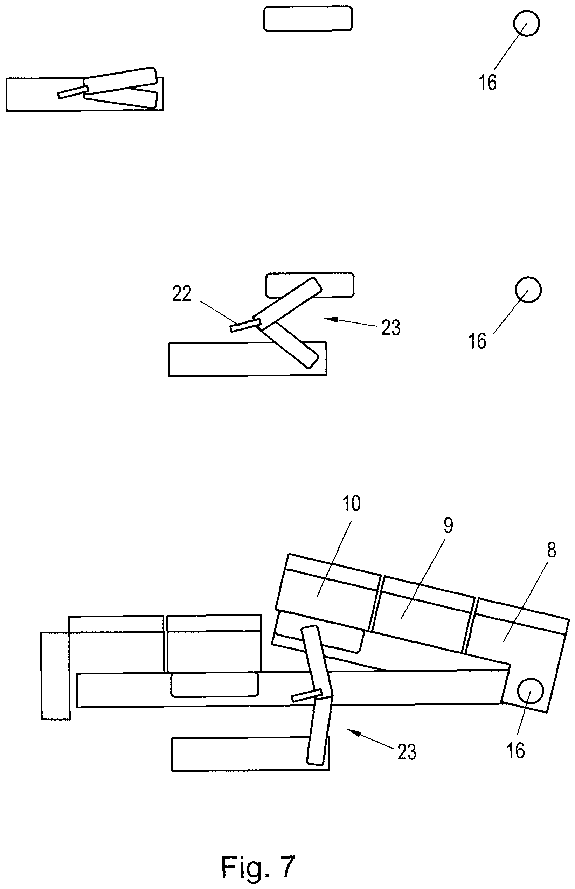

Die Fig. 7 zeigt eine Variante der Fig. 6 betreffend den Hebemechanismus, hier wird statt einer reinen Drehbewegung eines Dreheelementes 21 eine Spreizbewegung eines Spreizelementes 23 wiederum mittels eines Linearantriebs 22 bewirkt. Auch hier kann die Verbindung zwischen Drehelement 21 und Hebeteil 27 wie oben beschrieben, erfolgen.

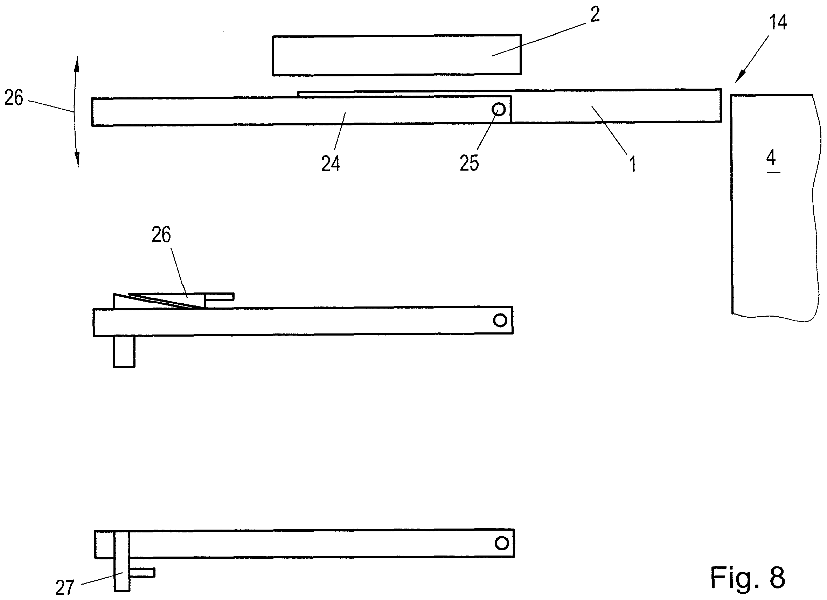

Die Fig. 8 zeigt, ebenfalls rein schematisch, eine Möglichkeit für die Reduktion bzw. Eliminierung der Höhendifferenz 14 (Fig. 2) zwischen dem freien Ende des Trittbrettes und der Bahnsteigoberkante: Eine Führung 24 für das Trittbrett 1 ist ihrerseits um eine Führungsachse 25, die parallel zur Wagenlängsachse verläuft, schwenkbar gelagert. Mit Hilfe eines Schwenkmechanismus, beispielsweise eines beweglichen Doppelkeils 26 oder eines Linearantriebs wie Spindel, oder hydraulische, oder pneumatische, ZylinderKolben-Einheit, kann die Führung 24 und damit das Trittbrett 1 um die Führungsachse 25 verschwenkt werden und so die Höhendifferenz 14 ausgleichen. Der Doppelpfeil 26 zeigt diese Bewegung an, wie sie begrenzt ist, hängt vom jeweiligen Fahrzeug und den Vorgaben der Bahnverwaltung ab.

Die Erfindung ist nicht auf das dargestellte und beschriebene Ausführungsbeispiel beschränkt, sondern kann verschiedentlich abgewandelt werden. So ist es möglich, den Hebemechanismus mit dem Drehelement 21 bzw. Spreizelement 23 nicht doppelt und am seitlichen Rande des Trittbretts 1 anzuordnen, sondern mittig und nur einfach, es kann die Aufteilung des verbleibenden horizontalen Spaltes 13 auf die Seite des Bahnsteigs 4 bzw. auf die Seite des Fußbodens 2 anders als dargestellt vorgenommen werden, doch erfordert dies dann eine Anpassung der Lage oder des Ausmaßes des Anhebens des Hebemechanismus, um nicht ungewollt eine, wenn auch geringe, Höhendifferenz im Bereich der Fußbodenoberkante auszubilden, weil der Angriffspunkt des Hebemechanismus bezüglich des Querprofils sich dann je nach der verbleibenden Spaltbreite verändert.

Die Ausbildung des Hebemechanismus kann von den dargestellten Beispielen abweichen, es ist möglich, eine ortsfeste hydraulische oder pneumatische Kolben-Zylinder-Einheit vorzusehen, die rein kraftschlüssig das jeweilige Querprofil nach oben drückt, und dergleichen mehr.

Als Materialien, Werkstoffe und Bauteile können alle die verwendet werden, die im Stand der Technik für Schiebetritte oder Klapptritte bekannt sind, in Kenntnis der Erfindung und in Kenntnis des Aufgabengebietes und des auszurüstenden Fahrzeuges gibt es diesbezüglich für den Fachmann keine Probleme.

Zusammenfassend kann somit festgehalten werden, dass die Erfindung im Wesentlichen ein bewegliches Trittbrett für eine Tür eines Fahrzeuges, insbesondere eines Schienenfahrzeuges, mit einem unterhalb der Trittleiste 2 zumindest im Wesentlichen quer zur Fahrtrichtung ausfahrbaren Trittbrett 1 betrifft. Zur Verbesserung des Anschlusses zwischen Trittbrett und Trittleiste ist vorgesehen, dass am fahrzeugfernen Endbereich des Trittbrettes 1 an zumindest einem Längsholm 17 des Trittbrettes 1 eine zur Fahrtrichtung zumindest im Wesentlichen parallel verlaufende Schwenkachse 16 vorgesehen ist, um die verschwenkbar zumindest zwei Schwenkholme 18, 20 gelagert sind, die jeweils ein Querprofil 8-12 tragen. Dabei kann jeder der Schwenkholme, wie dargestellt, in zwei fluchtende Schwenkholme geteilt sein, um die mechanische und dynamische Situation zu verbessern; auch sind zumeist mehr als zwei solcher Schwenkholme vorgesehen, um mehr als zwei Querprofile 8-12 vorsehen zu können. Weiters ist jeder der Schwenkholme nur mit dem ihm zugeordneten Querprofil 8-9 fest verbunden, während die anderen Querprofile frei auf ihm aufliegen. Schließlich ist fahrzeugfest ein Hebemechanismus 21, 22, 23 vorgesehen, der nur das unmittelbar vor der Trittleiste 2 befindliche Querprofil 8-12 anhebt.

### Bezugszeichenliste:

| | | | |
|---|---|---|---|
| 01 | Trittbrett | 20 | Schwenkholme |
| 02 | Trittleiste | 21 | Drehelement |
| 03 | Doppelpfeil | 22 | Linearantrieb |
| 04 | Bahnsteig | 23 | Spreizelement |
| 05 | Fußbodenoberkante | 24 | Führung |
| 06 | Oberfläche | 25 | Führungsachse |
| 07 | Bahnsteigoberkante | 26 | Pfeil |
| 08 | -12 Querprofile | 27 | Hebeteil |
| 13 | Spalt | 28 | Klappachse |
| 14 | Höhendifferenz | 29 | Führungsteil |
| 15 | Waagrechte | 30 | Führungsschiene |
| 16 | Schwenkachse | 31 | Bolzen |
| 17 | Längsholme | 32 | Flacher Bolzen |
| 18 | Schwenkholme | 33 | Fangfläche |
| 19 | Freie Kante | 34 | Ausnehmung |

## Patentansprüche

1. Fahrzeug, insbesondere Schienenfahrzeug, aufweisend einen Wagenkasten mit einer Trittleiste (2), wobei unterhalb der Trittleiste (2) ein zumindest im Wesentlichen quer zur Fahrtrichtung ausfahrbares Trittbrett (1) vorgesehen ist, **dadurch gekennzeichnet, dass** eine begehbare Fläche des Trittbrettes durch parallel zur Fahrtrichtung verlaufende Querprofile (8-12) gebildet ist, dass am fahrzeugfernen Endbereich des Trittbrettes (1) an zumindest einem Längsholm (17) des Trittbrettes (1) eine zur Fahrtrichtung zumindest im Wesentlichen parallel verlaufende Schwenkachse (16) vorgesehen ist, um die verschwenkbar zumindest zwei Schwenkholme (18, 20) gelagert sind, die jeweils ein Querprofil (8-12) tragen, dass jeder der Schwenkholme (18, 20) nur mit dem ihm zugeordneten Querprofil (8-12) fest verbunden ist und dort endet, während die fahrzeugferneren Querprofile frei auf ihm aufliegen, und dass ein Hebemechanismus für Querprofile (8-12) des Trittbrettes fahrzeugfest vorgesehen ist, entweder bestehend aus einem Drehelement (21) und einem Linearantrieb (22) oder bestehend aus einem Linearantrieb (22) und Spreizelementen (23), der das unmittelbar vor der Trittleiste (2) befindliche Querprofil (8-12) anhebt.

2. Fahrzeug nach Anspruch 1, **dadurch gekennzeichnet, dass** der Hebemechanismus einen unter dem Trittbrett (1) angeordneten Linearantrieb (22) und ein mit ihm um eine Klappachse (28) drehbar verbundenes Drehelement (21) aufweist, das das Drehelement (21) vom Linearantrieb (22) verdreht wird und so das über dem Drehelement (21) befindliche Querprofil (8-12) hochklappt.

3. Fahrzeug nach Anspruch 1, **dadurch gekennzeichnet, dass** der Hebemechanismus einen unter dem Trittbrett (1) angeordneten Linearantrieb (22) und ein Spreizelement (23) aufweist, das zwei um eine gemeinsame Spreizachse verdrehbare Elemente besitzt, und dass der Linearantrieb (22) auf eines dieser Elemente im Bereich der Spreizachse oder auf diese selbst wirkt.

4. Fahrzeug nach einem der Ansprüche 1 bis 3, **dadurch gekennzeichnet, dass** das Trittbrett (1) in einer Führung (24) am Fahrzeug beweglich gelagert ist, dass die Führung (24) im Bereich der Trittleiste (2) um eine Führungsachse (25) schwenkbar gelagert ist und dass im abgewandten Endbereich der Führung (24) ein Antrieb (26, 27) vorgesehen ist, der diesen Endbereich um die Führungsachse (25) verschwenkt.

5. Fahrzeug nach einem der Ansprüche 1 bis 3, **dadurch gekennzeichnet, dass** jeweils zwei Schwenkholme (18, 20) für jedes Querprofil (8-12) vorgesehen sind.

## Claims

1. Vehicle, in particular a rail vehicle, having a car body with a tread plate (2), wherein a footboard (1) that can be extended at least substantially transversely to the direction of travel is provided below the tread plate (2), **characterised in that** a surface of the footboard that can be stepped on is formed by transverse profiles (8-12) running in parallel to the direction of travel, a pivot axis (16) running at least substantially in parallel to the direction of travel is provided at the end region of the footboard (1) remote from the vehicle on at least one longitudinal member (17) of the footboard (1), around which pivot axis at least two pivot members (18, 20), which each bear a transverse profile (8-12), are pivotably mounted, each of the pivot members (18, 20) is only fixed to the transverse profile (8-12) assigned to it and ends there, while the transverse profiles remote from the vehicle lie on it freely, and a lifting mechanism for transverse profiles (8-12) of the footboard is provided fixed to the vehicle, either consisting of a rotary element (21) and a linear drive (22) or consisting of a linear drive (22) and expansion elements (23), said lifting mechanism lifting the transverse profile (8-12) located directly in front of the tread plate (2).

2. Vehicle according to claim 1, **characterised in that** the lifting mechanism has a linear drive (22) arranged under the footboard (1), and a rotary element (21) connected to it so as to be rotatable around a folding axis (28), the rotary element (21) is rotated by the linear drive (22) and the transverse profile (8-12) located above the rotary element (21) thus folds up.

3. Vehicle according to claim 1, **characterised in that** the lifting mechanism has a linear drive (22) arranged under the footboard (1) and an expansion element (23) that has two elements that can be rotated around a common expansion axis, and the linear drive (22) has an effect on one of these elements in the region of the expansion axis or on the expansion axis itself.

4. Vehicle according to one of claims 1 to 3, **characterised in that** the footboard (1) is moveably mounted in a guide (24) on the vehicle, the guide (24) is mounted so as to be pivotable around a guide axis (25) in the region of the tread plate (2), and a drive (26, 27) is provided in the end region of the guide (24) that is facing away, said drive pivoting this end region around the guide axis (25).

5. Vehicle according to one of claims 1 to 3, **characterised in that** two pivot members (18, 20) are provided for each transverse profile (8-12).

## Revendications

1. Véhicule, en particulier véhicule ferroviaire, présentant une caisse avec un garde-pied (2), dans lequel un marchepied (1) pouvant être déployé au moins sensiblement transversalement au sens de marche est prévu au-dessous du garde-pied (2),
**caractérisé en ce qu'**une surface praticable du marchepied est formée par un profilé transversal (8-12) s'étendant parallèlement au sens de marche, qu'un axe de pivotement (16) s'étendant au moins sensiblement parallèlement au sens de marche est prévu sur la zone d'extrémité du marchepied (1) éloignée du véhicule sur au moins un longeron longitudinal (17) du marchepied (1), autour duquel au moins deux longerons pivotants (18, 20) sont montés de manière pivotante, qui portent respectivement un profilé transversal (8-12),
**que** chacun des longerons pivotants (18, 20) est fixé seulement au profilé transversal (8-12) à lequel il est associé et termine à cet endroit, tandis que les profilés transversaux éloignés du véhicule reposent librement sur celui-ci,
et qu'un mécanisme de levage pour des profilés transversaux (8-12) du marchepied est prévu de manière fixée au véhicule, soit constitué d'un élément rotatif (21) et d'un entraînement linéaire (22), soit constitué d'un entraînement linéaire (22) et d'éléments d'écartement (23), qui lève le profilé transversal (8-12) se trouvant directement devant le garde-pied (2).

2. Véhicule selon la revendication 1, **caractérisé en ce que** le mécanisme de levage présente un entraînement linéaire (22) disposé sous le marchepied (1) et un élément rotatif (21) relié à celui-ci de manière à pouvoir tourner autour d'un axe de basculement (28),
**que** l'élément rotatif (21) est amené en rotation par l'entraînement linéaire (22) et ainsi le profilé transversal (8-12) se trouvant au-dessus de l'élément rotatif (21) bascule vers le haut.

3. Véhicule selon la revendication 1, **caractérisé en ce que** le mécanisme de levage présente un entraînement linéaire (22) disposé sous le marchepied (1) et un élément d'écartement (23), qui possède deux éléments pouvant tourner autour d'un axe d'écartement commun, et que l'entraînement linéaire (22) agit sur un de ces éléments dans la zone de l'axe d'écartement ou sur celui-là même.

4. Véhicule selon l'une quelconque des revendications 1 à 3, **caractérisé en ce que** le marchepied (1) est monté mobile dans un guidage (24) sur le véhicule, que le guidage (24) est monté dans la zone du garde-pied (2) de manière à pouvoir pivoter autour d'un axe de guidage (25) et qu'un entraînement (26, 27) est prévu dans la zone d'extrémité opposée du guidage (24), qui fait pivoter cette zone d'extrémité autour de l'axe de guidage (25).

5. Véhicule selon l'une quelconque des revendications 1 à 3, **caractérisé en ce que** respectivement deux longerons pivotants (18, 20) sont prévus pour chaque profilé transversal (8-12).
